# EUROPEAN PATENT APPLICATION

(11) **EP 4 799 806 A1**
(43) Date of publication of application: **02.09.2026**
(21) Application number: 25217611.0
(22) Date of filing: 21.11.2025
(51) Int. Cl.: B32B 5/26

(54) **SYSTEMS AND METHODS FOR FORMING A COMPOSITE LAYERED ASSEMBLY INCLUDING A NON-WOVEN CARBON FIBER MATERIAL**

(30) Priority: 26.02.2025 US 202519063492
(71) Applicant: The Boeing Company, Arlington, VA 22202 (US)
(72) Inventor: TRAN, Davis, Arlington (US); CHIEN, Brian H., Arlington (US); DOLL, Brenna Catherine, Arlington (US)
(74) Representative: St Clair Jones, Gregory Arthur Langley

(57) **Abstract**

A system and method of forming a composite layered assembly includes arranging a first fiberglass layer between a non-woven carbon fiber layer and a decorative layer. The decorative layer, the first fiberglass layer, and the non-woven carbon fiber layer are exposed to one or more curing conditions to form a composite layered assembly.

## Description

### FIELD OF THE DISCLOSURE

Examples of the present disclosure generally relate to systems and methods for forming composite layered assemblies including non-woven carbon fiber and fiberglass materials that may be used on or within an aircraft.

### BACKGROUND OF THE DISCLOSURE

Traditionally, cargo liners used to line surfaces within a cargo section of an aircraft are manufactured from fiberglass that is coated in phenolic or cyanate ester resins and are cured with a decorative film, such as Tedlar. The cargo liners may be subject to excess wear based on loads being moved into and out of the cargo sections of the aircraft. The liners may require repair or replacement after sustaining a certain level of wear.

Additionally, the cargo liners are designed to meet certain oil burn requirements or other flammability requirements. However, although the fiberglass material is capable of meeting certain flammability requirements, the material remains flammable. As can be appreciated, a need exists for an improved liner that is manufactured of non-flammable materials, that has improved durability, and can withstand higher levels of wear.

### SUMMARY OF THE DISCLOSURE

A need exists for liners that may be installed within an aircraft, such as within a cargo section of the aircraft. The liners may be manufactured of layers of multiple materials that may be semi-rigid, non-flammable, and have improved durability and/or capable of sustaining high levels of wear. With those needs in mind, certain examples of the present disclosure provide a system and method including arranging a first fiberglass layer between a non-woven carbon fiber layer and a decorative layer. The decorative layer, the first fiberglass layer, and the non-woven carbon fiber layer are exposed to one or more curing conditions to form a composite layered assembly.

In one example, exposing the decorative layer, the first fiberglass layer, and the non-woven carbon fiber layer to the curing conditions changes one or more characteristics of one or more of the decorative layer, the first fiberglass layer, or the non-woven carbon fiber layer.

In another example, the method includes arranging a second fiberglass layer relative to the non-woven carbon fiber layer, and exposing the decorative layer, the first fiberglass layer, the non-woven carbon fiber layer, and the second fiberglass layer to the one or more curing conditions to form the composite layered assembly.

In one example, the method can include applying heat and/or pressure to one or more non-woven carbon fiber components to form the non-woven carbon fiber layer. Optionally, the non-woven carbon fiber components may be manufactured of a recycled non-woven carbon fiber material. Optionally, the first fiberglass layer may be manufactured of a thermoplastic polymer or other material, and the first fiberglass layer may be arranged relative to the one or more non-woven carbon fiber components. Heat and/or pressure may be applied to the first fiberglass layer and the one or more non-woven carbon fiber components to form a sub-assembly including the non-woven carbon fiber layer and the first fiberglass layer.

In one example, the first fiberglass layer may be manufactured of a thermoset fiberglass composite material or a thermoplastic fiberglass composite material. Optionally, the first fiberglass layer may be impregnated with a resin product.

In one example, the composite layered assembly may be machined to form a layered product, and the layered product may be installed within an aircraft system.

Certain examples of the present disclosure provide a composite layered assembly that includes a non-woven carbon fiber layer, a first fiberglass layer having a bottom surface that is operably coupled with a top surface of the non-woven carbon fiber layer, and a decorative layer that may be operably coupled with a top surface of the first fiberglass layer. The decorative layer, the first fiberglass layer, and the non-woven carbon fiber layer are exposed to one or more curing conditions to form a composite layered assembly.

Examples of the present disclosure provide a method of forming a composite layered assembly that includes arranging a bottom surface of a first fiberglass layer facing toward a top surface of a recycled carbon fiber layer that is manufactured of a non-woven carbon fiber material; arranging a top surface of a second fiberglass layer facing toward a bottom surface of the recycled carbon fiber layer; and arranging a decorative layer relative to a top surface of the first fiberglass layer. The decorative layer, the first fiberglass layer, the recycled carbon fiber layer, and the second fiberglass layer are exposed to one or more curing conditions to form a composite layered assembly.

### BRIEF DESCRIPTION OF THE DRAWINGS

Figure 1 illustrates a perspective view of a manufacturing operation of forming a non-woven carbon fiber layer, according to an example of the present disclosure.
Figure 2 illustrates a non-woven carbon fiber layer, according to an example of the present disclosure.
Figure 3 illustrates an exploded perspective view of a composite layered assembly, according to an example of the present disclosure.
Figure 4 illustrates an exploded perspective view of a composite layered assembly, according to an example of the present disclosure.
Figure 5 illustrates an exploded perspective view of a composite layered assembly, according to an example of the present disclosure.
Figure 6 illustrates a flowchart of a method of forming a composite layered assembly, according to an example of the present disclosure.
Figure 7 illustrates a perspective front view of an aircraft system, according to an example of the present disclosure.
Figure 8 illustrates a perspective view of an interior portion of the aircraft system shown in Figure 7.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

As described herein, examples of the present disclosure provide systems and methods for forming a layered assembly that includes one or more fiberglass layers, a non-woven carbon fiber layer, and optionally a decorative layer. In one example, the layered assembly may include a fiberglass layer positioned between the decorative layer and the non-woven carbon fiber layer. In another example, the layered assembly may include a first fiberglass layer positioned between the decorative layer and the non-woven carbon fiber layer, and a second fiberglass layer positioned on a second side of the non-woven carbon fiber layer. For example, the non-woven carbon fiber layer may be positioned between the first and second fiberglass layers.

The layers may be exposed to one or more curing, bonding, or coupling conditions to chemically and/or physically bond, couple, and/or attach the plural layer components together to form a cured assembly. The cured composite layered assembly may be formed into one or more structures with one or more secondary manufacturing processes. The one or more formed structures may be coupled with or disposed within a system, such as an aircraft system or other vehicle system, a building or other stationary structure, or the like.

In one example, the non-woven carbon fiber layer may be formed with one or more non-woven carbon fiber components, sheets, elements, or the like. For example, one or more rolls of non-woven carbon fiber may be exposed to pressure and/or heat to mold the non-woven carbon fiber pieces together to form a rigid non-woven carbon fiber layer. In one example, the non-woven carbon fiber components may be manufactured of recycled carbon fiber materials. In one example, the fiberglass layers may be manufactured of a thermoplastic polymer or other material, and may be exposed to the pressure and/or heat with the non-woven carbon fiber to form a sub-assembly of the fiberglass layers and the non-woven carbon fiber layer. In another example, the fiberglass layers may be manufactured of a thermoset fiberglass material or an alternative material, and may be cured with the non-woven carbon fiber layer and the decorative layer to form the composite layered assembly. In another example,

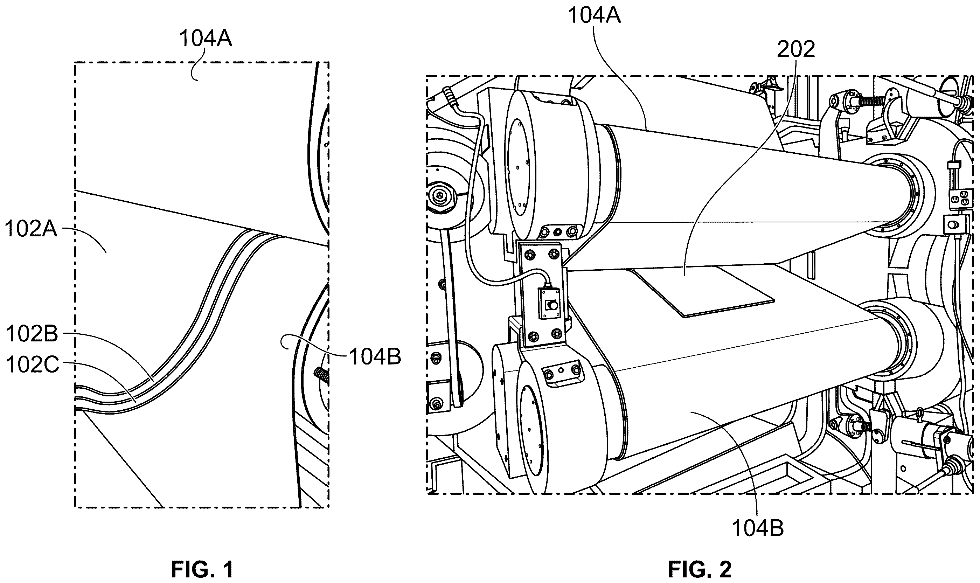

Figure 1 illustrates a perspective view of a manufacturing operation of forming a non-woven carbon fiber layer, according to an example of the present disclosure. The non-woven carbon fiber layer may be formed by arranging one or more non-woven carbon fiber components 102A-C on top of each other and applying heat and/or pressure, such as by rolling elements 104A, 104B. For example, the components 102A-C may be in the shape of sheets, rolls, or the like, and each of the components 102A-C may be manufactured of a non-woven carbon fiber material. In at least one example, one or more of the components 102A-C may be manufactured of recycled non-woven carbon fiber materials.

Figure 2 illustrates a non-woven carbon fiber layer 202, according to an example of the present disclosure. The non-woven carbon fiber layer 202 may be formed by the rolling elements 104A-B applying heat and/or pressure to the non-woven components 102A-C. In one example, the non-woven carbon fiber layer 202 may be referred to as a carbon fiber laminate, a recycled carbon fiber laminate, a non-woven laminate, or the like.

In the illustrated example, the non-woven carbon fiber layer 202 is formed by processing the components 102A-C through a double belt press while exposing the components to temperatures about 700F. For example, the recycled non-woven carbon fiber components may be processed through a continuous or semi-continuous compression molding step to create a semi-flexible liner or laminate. In another example, the non-woven components 102A-C may be placed within a stamping press, a mold, or the like, with pressure and/or heat being applied thereto to form the carbon fiber layer 202. By exposing the components to the pressure and/or thermal conditions, the components 102A-C may be molded, formed, or consolidated into the non-woven carbon fiber layer 202. For example, the components 102A-C may be combined together into a single, coherent whole layer. In one example, the molded carbon fiber layer 202 may have a rigidity, stiffness, hardness, etc., that is greater than a rigidity, stiffness, hardness than the non-woven components 102A-C. For example, applying the heat and/or pressure to the components 102A-C changes one or more material characteristics of the components 102A-C in the forming of the non-woven carbon fiber layer 202.

In one example, the number of non-woven carbon fiber components 102A-C used to form the layer 202 may be determined based on an areal weight of a system in which the layer 202 may be used, such as an aircraft system. The non-woven carbon fiber layer 202 may be formed of a single non-woven component, by two non-woven components, or by more than two non-woven components. As another example, the number of non-woven carbon fiber components 102A-C used to form the layer 202 may be based on an availability of one or more different weights, thicknesses, sizes, or the like, of the components.

In one or more examples, the material(s) and/or product(s) used within each of the layers of the composite layered assembly 300 may be based on one or more requirements of a structure formed by the composite layered assembly (e.g., durability requirements, weight requirements, thickness requirements, thermal requirements, material toxicity requirements, flammability requirements, aesthetic requirements, or the like).

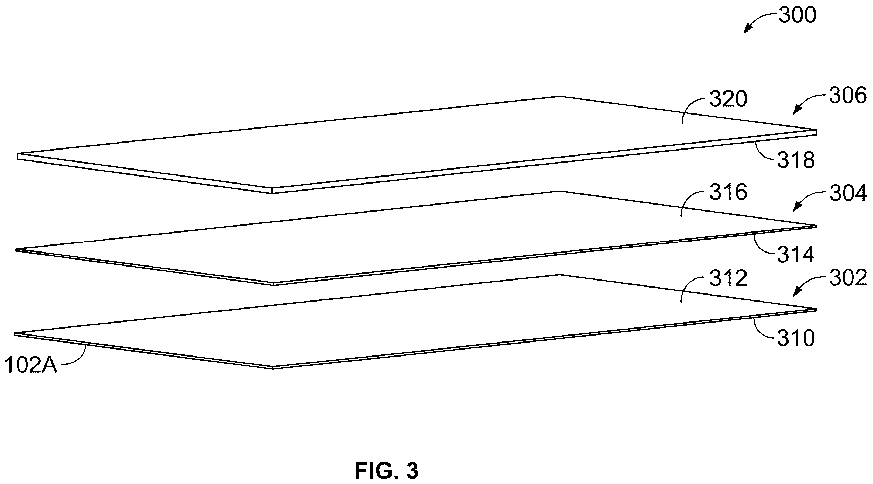

Figure 3 illustrates an exploded perspective view of a composite layered assembly 300, according to one example of the present disclosure. The composite layered assembly 300 includes a non-woven carbon fiber layer 302 that has been formed with one non-woven carbon fiber component 102A. The composite layered assembly also includes a first fiberglass layer 304 and a decorative layer 306 with the first fiberglass layer 304 arranged between the decorative layer 306 and the non-woven carbon fiber layer 302. For example, a bottom surface 314 of the first fiberglass layer 304 faces towards and is coupled with a top surface 312 of the non-woven carbon fiber layer 302; and a top surface 316 of the first fiberglass layer 304 faces towards and is coupled with a bottom surface 318 of the decorative layer 306.

In one example, the first fiberglass layer 304 may be a fiberglass material that may be coated with a thermoplastic polymer coating. Optionally, the thermoplastic-coated fiberglass material may be impregnated with a resin product. In another example, the first fiberglass layer 304 may be a thermoset fiberglass material that may be impregnated with a resin product.

The decorative layer 306 may include one or more features (e.g., colors, patterns, illustrations, textured elements such as bumps or dimples, or the like) disposed on a top surface 320 of the decorative layer 306. The one or more features may be based on a final installed location in which the composite layered assembly 300 may be placed.

The decorative layer 306, the first fiberglass layer 304, and the non-woven carbon fiber layer 302 may be exposed to one or more curing conditions to form the cured and assembled composite layered assembly 300. For example, exposing the layered assembly to the curing conditions may physically and/or chemically bond, cure, couple, or the like, the layers of components together such that the one or more characteristics of one or more of the layers are changed.

In one example, the layer components 302, 304, 306 may be arranged, stacked, and/or positioned together, and may be placed within a curing device that may expose the layered material to one or more bonding, coupling, and/or curing conditions (e.g., temperature, humidity, pressure, or the like). As one example, the cured composite layered assembly 300 may be formed by placing the layers 302, 304, 306 in a metal die, a metal die set, an autoclave, an oven, or the like, and exposing the layers to one or more curing conditions. As another example, the cured composite layered assembly 300 may be formed by placing the layers 302, 304, 306 in a vacuum bag, and exposing the layers to one or more of temperature, pressure, and/or humidity conditions to form the cured material assembly.

In one or more examples, the decorative layer 306 may include an adhesive layer or one or more adhesive elements (not shown) operably coupled with the bottom surface 318 of the decorative layer 306. For example, the adhesive layer or adhesive elements may be pressure sensitive adhesives, adhesive liners, adhesive pastes, or the like, that may be used to couple the bottom surface 318 of the decorative layer 306 with the top surface 316 of the first fiberglass layer 304, such as during exposure of the layers to the curing conditions.

In one example, the first fiberglass layer 304 may be manufactured of a thermoplastic-coated fiberglass material and the first fiberglass layer 304 may be molded together with the non-woven carbon fiber layer 302 during the compression molding stage. For example, the first fiberglass layer 304 may be arranged with the non-woven carbon fiber components 102 (shown in Figure 1) such that the first fiberglass layer 304 and the components 102 are processed together through the rolling elements 104A-B to form a sub-assembly that includes the first fiberglass layer 304 and the non-woven carbon fiber layer 202. Subsequent to the first fiberglass layer 304 being molded with the non-woven carbon fiber layer 202, the decorative layer 306 may be positioned on the top surface 316 of the first fiberglass layer 304, and the three layers may be exposed to the curing conditions to form the composite layered assembly 300.

In one example, the curing conditions may vary based on whether or not the first fiberglass layer 304 was molded with the non-woven carbon fiber components 102A-C during the compression molding step. For example, the layers may be subject to a first set of curing conditions to form the composite layered assembly 300 if the first fiberglass layer 304 is not molded with the non-woven carbon fiber layer 202; or the layers may be subject to a different, second set of curing conditions if the first fiberglass layer 304 is molded with the non-woven carbon fiber layer 202.

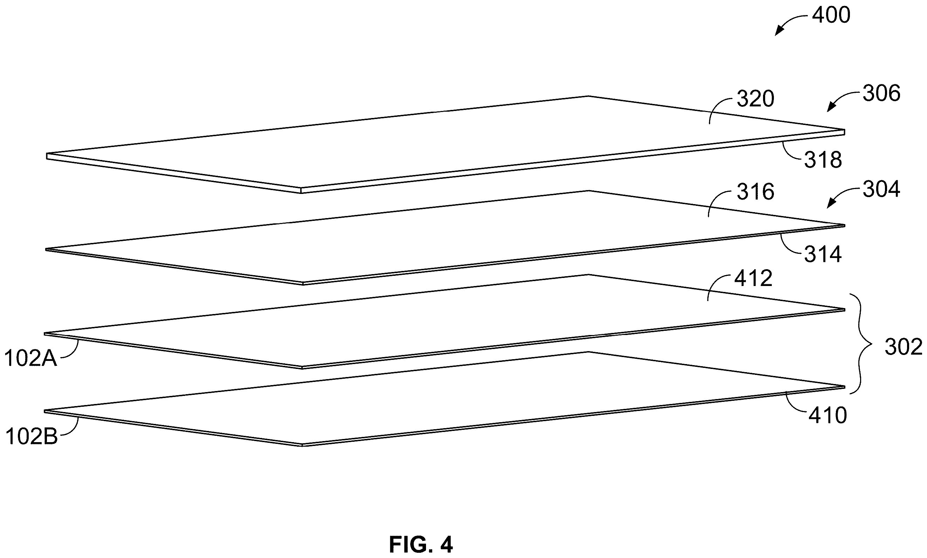

Figure 4 illustrates a composite layered assembly 400, according to another example of the present disclosure. The composite layered assembly 400 includes a non-woven carbon fiber layer 402, the first fiberglass layer 304, and the decorative layer 306. In the illustrated example, the non-woven carbon fiber layer 402 may be formed with two non-woven components 102A, 102B. For example, the two non-woven components 102A, 102B may be processed through the rolling elements 104A, 104B to form the molded non-woven carbon fiber layer 402.

The layers are arranged such that the first fiberglass layer 304 is positioned between the decorative layer 306 and the non-woven carbon fiber layer 402. For example, the bottom surface 318 of the decorative layer 306 faces towards the top surface 316 of the first fiberglass layer 304, and the bottom surface 314 of the first fiberglass layer 304 faces towards a top surface 412 of the non-woven carbon fiber layer 402.

The non-woven carbon fiber layer 402, the first fiberglass layer 304, and the decorative layer 306 may be exposed to the one or more curing conditions to form the cured and assembled composite layered assembly 400. For example, exposing the layered assembly to the curing conditions may physically and/or chemically bond, cure, couple, or the like, the layers of components together such that the one or more characteristics of one or more of the layers are changed.

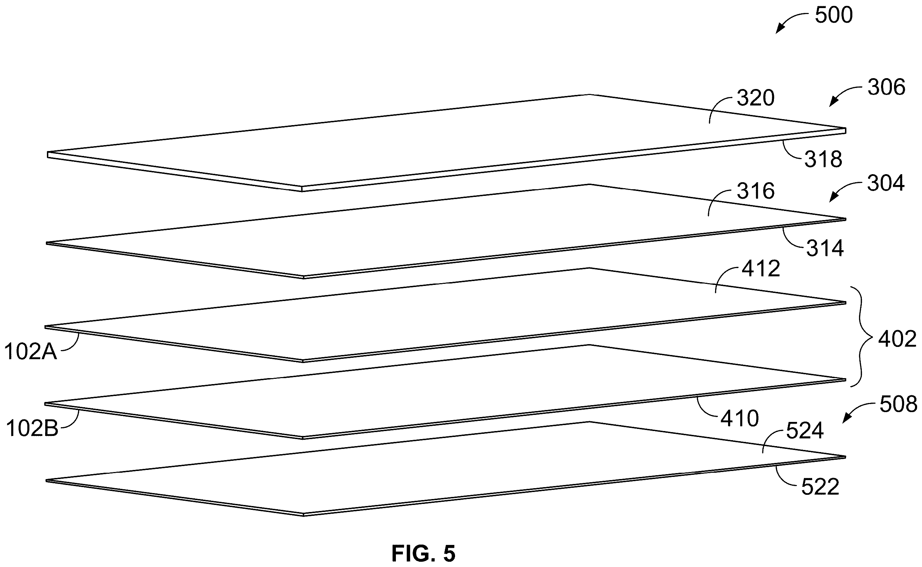

Figure 5 illustrates a composite layered assembly 500, according to another example of the present disclosure. The composite layered assembly 500 includes the non-woven carbon fiber layer 402 (that has been formed with the two non-woven carbon fiber components 102A, 102B), the first fiberglass layer 304, and the decorative layer 306. The composite layered assembly 500 also includes a second fiberglass layer 508 that is arranged on a bottom surface 410 of the non-woven carbon fiber layer 402. For example, a top surface 524 of the second fiberglass layer 508 faces towards and is coupled with the bottom surface 410 of the non-woven carbon fiber layer 402.

In one example, the first fiberglass layer 304 and the second fiberglass layer 508 may be manufactured of the same material or similar materials. As one example, the first and second fiberglass layers may be manufactured of a fiberglass material that may be coated with a thermoplastic polymer coating. Optionally, the thermoplastic-coated fiberglass material may be impregnated with a resin product. In another example, the first and second fiberglass layers 304, 508 may be manufactured of a thermoset fiberglass material that may be impregnated with a resin product. Optionally the first and second fiberglass layers 304, 508 may be manufactured of an alternative composite material.

The decorative layer 306, the first fiberglass layer 304, the non-woven carbon fiber layer 402, and the second fiberglass layer 508 may be exposed to the one or more curing conditions to form the cured and assembled composite layered assembly 500. For example, exposing the layered assembly to the curing conditions may physically and/or chemically bond, cure, couple, or the like, the layers of components together such that the one or more characteristics of one or more of the layers are changed.

In one example, the first and second fiberglass layers 304, 508 may be manufactured of a thermoplastic-coated fiberglass material and the first and second fiberglass layers 304, 508 may be molded together with the non-woven carbon fiber layer 402 during the compression molding stage. For example, the non-woven carbon fiber components 102A, 102B may be arranged between the first and second fiberglass layers 304, 508, and then the first and second fiberglass layers 304, 508 and the components 102A, 102B are processed together through the rolling elements 104A-B to form a sub-assembly that includes the first fiberglass layer 304, the second fiberglass layer 508, and the non-woven carbon fiber layer 202. Subsequent to the first and second fiberglass layers 304, 508 being molded with the non-woven carbon fiber layer 202, the decorative layer 306 may be positioned on the top surface 316 of the first fiberglass layer 304, and the four layers may be exposed to the curing conditions to form the composite layered assembly 500.

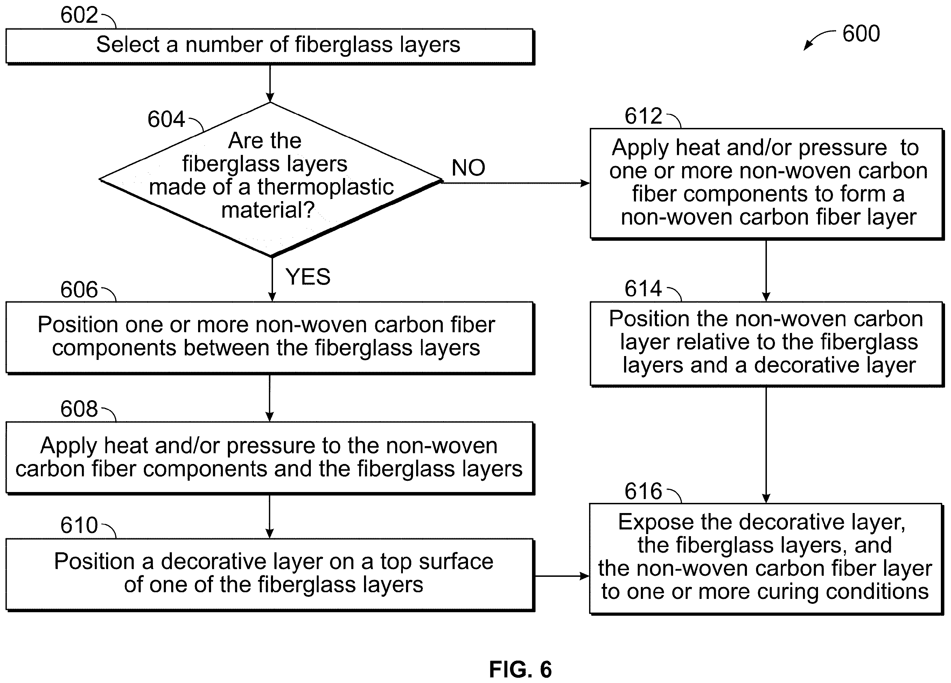

Figure 6 illustrates a flowchart 600 of a method of forming a composite layered assembly, according to an example of the present disclosure. At 602, a number of fiberglass layers to be included in the composite layered assembly is selected. The number of fiberglass layers may be based on one or more requirements of a structure that will be formed of the composite layered assembly (e.g., durability requirements, weight requirements, thickness requirements, thermal requirements, material toxicity requirements, flammability requirements, aesthetic requirements, or the like). The composite layered assembly may include one fiberglass layer (e.g., illustrated in Figure 3), or two fiberglass layers (e.g., illustrated in Figure 5), or more than two fiberglass layers (not shown).

At 604, a determination is made if the fiberglass layers are manufactured of a thermoplastic polymer or other similar material. For example, if the fiberglass layers are manufactured of a thermoplastic polymer, the fiberglass layers may be molded with non-woven carbon fiber components. Alternatively, if the fiberglass layers are manufactured of another material (e.g., a thermoset material), the fiberglass layers may not be molded with the non-woven carbon fiber components. If the fiberglass layers are manufactured of a thermoplastic material, flow of the method proceeds toward 606.

At 606, one or more non-woven carbon fiber components (e.g., sheets, rolls, etc.) are positioned relative to the fiberglass layers. If one fiberglass layer is selected at 602, the fiberglass layer may be arranged on one surface of one of the non-woven components. If two fiberglass layers are selected at 602, the non-woven carbon fiber components may be positioned between the two fiberglass layers. At 608, heat and/or pressure are applied to the non-woven carbon fiber components and the fiberglass layer(s) to mold together the sub-assembly that includes a non-woven carbon fiber layer and the fiberglass layer(s). In one or more examples, exposing the fiberglass layer(s) and the carbon fiber components to the heat and/or pressure conditions may change one or more characteristics of the fiberglass layer(s) and/or the carbon fiber components, such as a hardness, an elasticity, a tensile strength, a toughness, a ductility, one or more chemical properties, or the like.

At 610, a decorative layer is positioned on a top surface of one of the fiberglass layers such that one of the fiberglass layers is positioned between the non-woven carbon fiber layer and the decorative layer. At 616, the decorative layer, the fiberglass layer(s), and the non-woven carbon fiber layer are exposed to one or more curing conditions to cure or bond the layers together to form the composite layered assembly.

Returning to step 604, if the fiberglass layer(s) are not manufactured of a thermoplastic polymer material, flow of the method proceeds toward 612. At 612, heat and/or pressure are applied to one or more non-woven carbon fiber components to mold together the components to form a molded, rigid non-woven carbon fiber layer. In one or more examples, exposing the carbon fiber components to the heat and/or pressure conditions may change one or more characteristics of the carbon fiber components such as a hardness, an elasticity, a tensile strength, a toughness, a ductility, one or more chemical properties, or the like.

At 614, the non-woven carbon fiber layer is arranged with the fiberglass layer(s) and a decorative layer such that at least one fiberglass layer is positioned between the decorative layer and the non-woven carbon fiber layer. At 616, the decorative layer, the fiberglass layer(s), and the non-woven carbon fiber layer are exposed to one or more bonding, coupling, and/or curing conditions (e.g., temperature, humidity, pressure, or the like) to form the cured composite layered assembly.

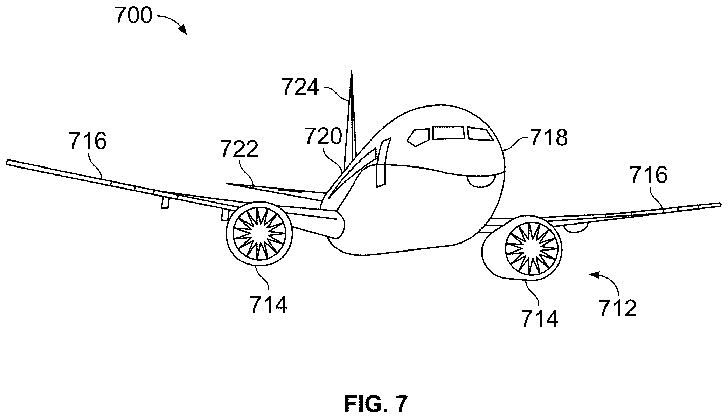

In one or more examples, the cured composite layered assembly may be machined, manipulated, cut, sliced, formed, or subject to any alternative secondary manufacturing processes to form a layered product that may be used within a system, such as an aircraft system. Figure 7 illustrates a perspective front view of an aircraft 700, according to an example of the present disclosure. The aircraft 700 includes a propulsion system 712 that may include two turbofan engines 714, for example. Optionally, the propulsion system 712 may include more engines 714 than shown. The engines 714 are carried by wings 716 of the aircraft 700. In other examples, the engines 714 may be carried by a fuselage 718 and/or an empennage 720. The empennage 720 may also support horizontal stabilizers 722 and a vertical stabilizer 724.

The fuselage 718 of the aircraft 700 defines an internal cabin, which may contain interior sidewall panels, ceiling panels, and floor panels. The internal cabin may include a cockpit, one or more work sections (for example, galleys, personnel carry-on baggage areas, and the like), one or more passenger sections (for example, first class, business class, and coach sections), one or more storage sections (e.g., cargo sections), and an aft section. Portions of the aircraft 700, such as the ceiling panels, sidewall panels, or floor panels of the cargo section or any other section of the aircraft 700 can be formed of the layered assemblies including a non-woven carbon fiber layer as described herein.

Optionally, instead of an aircraft system, examples of the present disclosure may be used with various other stationary and/or non-stationary structures. For example, the layered assemblies including fiberglass and non-woven carbon fiber laminates may be used to form one or more structures used on and/or within buildings or other vehicles such as automobiles, buses, locomotives and train cars, watercraft, spacecraft, and the like.

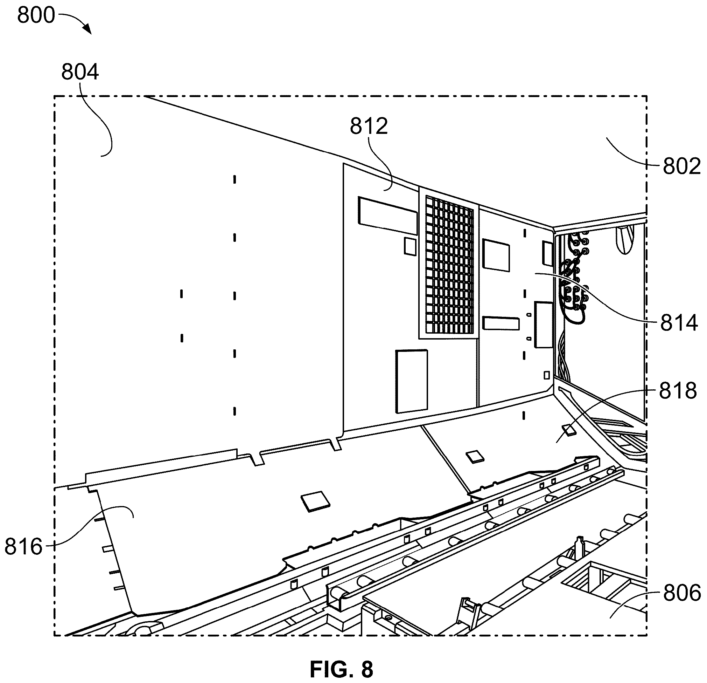

Figure 8 illustrates a perspective view of an interior portion of a vehicle, such as a cargo section 800 of the aircraft 700 shown in Figure 7, according to an example of the present disclosure. The cargo section 800 includes a ceiling panel 802, plural side panels 804, and a flooring panel 806 that define the interior cargo section of the aircraft. In one or more examples, the cargo section 800 may include one or more liners 812, 814, 816, 818 that may be operably coupled with the ceiling panel, the side panels, and/or the flooring panels via one or more fastening elements. The liners 812-818 may be manufactured of the composite layered assembly (e.g., including one or more fiberglass layers, a non-woven carbon fiber layer, and a decorative layer). For example, the composite layered assembly may be machined, formed, cut, spliced, or may undergo any alternative secondary manufacturing process to be formed into an appropriately sized and shaped layered product to be installed within the cargo section 800 of an aircraft, to be installed within another section of the aircraft, within another type of vehicle (e.g., marine vessel), within a building or other stationary facility, or the like.

As described herein, examples of the present disclosure provide systems and methods of forming composite layered assemblies that include non-woven carbon fiber materials, one or more fiberglass layers, and optionally a decorative layer. The composite layered assemblies may be formed into structures that may be coupled with or disposed within an aircraft, such as within a cargo section of the aircraft. The composite layered assemblies may be used to form semi-rigid, high-wear, non-flammable liner structures for aircraft cargo interior linings. For example, the composite layered assemblies may be non-flammable or may have improved flammability relative to layered assemblies devoid non-woven carbon fiber layers, assemblies that include woven carbon fiber layers, or the like. Additionally, the composite layered assemblies may have improved durability relative to assemblies devoid one or more fiberglass layers. For example, the examples of the present disclosure provide systems and methods of forming a structure having improved flammability requirements and/or capabilities, improved durability, improved sustainability (e.g., responsive to using the recycled non-woven components), with more opportunities to select materials to meet weight one or more requirements of the structure, relative to known material assemblies used to form liners installed within aircraft cargo sections.

Further, the disclosure comprises examples according to the following clauses:
Clause 1: a method comprising:
   arranging a first fiberglass layer between a non-woven carbon fiber layer and a decorative layer; and
   exposing the decorative layer, the first fiberglass layer, and the non-woven carbon fiber layer to one or more curing conditions to form a composite layered assembly.
Clause 2: the method of clause 1, wherein exposing the decorative layer, the first fiberglass layer, and the non-woven carbon fiber layer to the one or more curing conditions changes one or more characteristics of one or more of the first fiberglass layer, the non-woven carbon fiber layer, or the decorative layer.
Clause 3: the method of clauses 1 or 2, further comprising:
   arranging a second fiberglass layer relative to non-woven carbon fiber layer; and
   exposing the decorative layer, the first fiberglass layer, the non-woven carbon fiber layer, and the second fiberglass layer to the one or more curing conditions to form the composite layered assembly.
Clause 4: the method of any of clauses 1-3, further comprising applying one or more of heat or pressure to one or more non-woven carbon fiber components to form the non-woven carbon fiber layer.
Clause 5: the method of clause 4, wherein the one or more non-woven carbon fiber components are manufactured of a recycled non-woven carbon fiber material.
Clause 6: the method of clause 4 or clause 5, wherein the first fiberglass layer is manufactured of a thermoplastic material, and further comprising:
   arranging the first fiberglass layer relative to the one or more non-woven carbon fiber components; and
   applying the one or more of heat or pressure to the one or more non-woven carbon fiber components and the first fiberglass layer to form a sub-assembly including the non-woven carbon fiber layer and the first fiberglass layer.
Clause 7: the method of any of clauses 1-6, wherein the first fiberglass layer is manufactured of one of a thermoset fiberglass composite material or a thermoplastic fiberglass composite material.
Clause 8: the method of any of clauses 1-7, wherein the first fiberglass layer is configured to be impregnated with a resin product.
Clause 9: the method of any of clauses 1-8, further comprising:
   machining the composite layered assembly to form a layered product; and
   installing the layered product within an aircraft system.
Clause 10: a composite layered assembly, comprising:
   a non-woven carbon fiber layer;
   a first fiberglass layer having a bottom surface configured to be operably coupled with a top surface of the non-woven carbon fiber layer; and
   a decorative layer configured to be operably coupled with a top surface of the first fiberglass layer,
   wherein the decorative layer, the first fiberglass layer, and the non-woven carbon fiber layer are configured to be exposed to one or more curing conditions to form a composite layered assembly.
Clause 11: the composite layered assembly of clause 10, further comprising a second fiberglass layer configured to be operably coupled with a bottom surface of the non-woven carbon fiber layer,
   wherein the decorative layer, the first fiberglass layer, the non-woven carbon fiber layer, and the second fiberglass layer are configured to be exposed to the one or more curing conditions to form the composite layered assembly.
Clause 12: the composite layered assembly of clause 11, wherein the first fiberglass layer and the second fiberglass layer are configured to be impregnated with a resin product.
Clause 13: the composite layered assembly of clause 11 or Clause 12, wherein the first fiberglass layer and the second fiberglass layer are manufactured of one of a thermoset fiberglass composite material or a thermoplastic fiberglass composite material.
Clause 14: the composite layered assembly of any of clauses 10-13, wherein the non-woven carbon fiber layer is configured to be manufactured of a recycled non-woven carbon fiber material.
Clause 15: the composite layered assembly of any of clauses 10-14:
   wherein the first fiberglass layer is manufactured of a thermoplastic material,
   wherein the first fiberglass layer is configured to be arranged relative to one or more non-woven carbon fiber components, the non-woven carbon fiber layer configured to be formed of the one or more non-woven carbon fiber components, and
   wherein the first fiberglass layer and the one or more non-woven carbon fiber components are configured to be exposed to one or more of heat or pressure to form a sub-assembly including the non-woven carbon fiber layer and the first fiberglass layer.
Clause 16: the composite layered assembly of any of clauses 10-15, further comprising an adhesive layer configured to be positioned between the top surface of the first fiberglass layer and the decorative layer to couple the decorative layer with the top surface of the first fiberglass layer during exposure to the one or more curing conditions.
Clause 17: a method for forming a composite layered assembly, comprising:
   arranging a bottom surface of a first fiberglass layer relative to or facing toward a top surface of a recycled carbon fiber layer, the recycled carbon fiber layer configured to be manufactured of a non-woven carbon fiber material;
   arranging a top surface of a second fiberglass layer relative to or facing toward a bottom surface of the recycled carbon fiber layer;
   arranging a decorative layer relative to a top surface of the first fiberglass layer; and
   exposing the decorative layer, the first fiberglass layer, the recycled carbon fiber layer, and the second fiberglass layer to one or more curing conditions to form a composite layered assembly.
Clause 18: the method of clause 17, further comprising applying one or more of pressure or heat to the non-woven carbon fiber material to form the recycled carbon fiber layer.
Clause 19: the method of clause 18, wherein the first fiberglass layer and the second fiberglass layer are manufactured of a thermoplastic material, and further comprising:
   arranging the first fiberglass layer and the second fiberglass layer relative to the non-woven carbon fiber material; and
   applying the one or more of heat or pressure to the first fiberglass layer, the second fiberglass layer, and non-woven carbon fiber material to form a sub-assembly including the recycled carbon fiber layer, the first fiberglass layer, and the second fiberglass layer.
Clause 20: the method of any of clauses 17-19, further comprising:
   forming the composite layered assembly into a layered product; and
   installing the layered product within an aircraft system.

As described herein, examples of the present disclosure provide structures formed of composite layered assemblies, with the composite layered assemblies including one or more non-woven carbon fiber components and one or more fiberglass layers. The layered assemblies may be coupled with and/or used within an aircraft. Further, examples of the present disclosure provide layered assemblies having improved flammability capabilities, improved durability, and improved sustainability relative to layered assemblies that are devoid layers of non-woven carbon fiber and/or fiberglass.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method, comprising:
arranging a first fiberglass layer (304) between a non-woven carbon fiber layer (302) and a decorative layer (306); and
exposing the decorative layer (306), the first fiberglass layer (304), and the non-woven carbon fiber layer (302) to one or more curing conditions to form a composite layered assembly (300).

2. The method of claim 1, wherein exposing the decorative layer (306), the first fiberglass layer (304), and the non-woven carbon fiber layer (302) to the one or more curing conditions changes one or more characteristics of one or more of the first fiberglass layer (304), the non-woven carbon fiber layer (302), or the decorative layer (306).

3. The method of claim 1 or claim 2, further comprising:
arranging a second fiberglass layer (508) relative to non-woven carbon fiber layer (302); and
exposing the decorative layer (306), the first fiberglass layer (304), the non-woven carbon fiber layer (302), and the second fiberglass layer (508) to the one or more curing conditions to form the composite layered assembly.

4. The method of any of claims 1 to 3, further comprising applying one or more of heat or pressure to one or more non-woven carbon fiber components (102A-C) to form the non-woven carbon fiber layer (302).

5. The method of claim 4, wherein the one or more non-woven carbon fiber components (102A-C) are manufactured of a recycled non-woven carbon fiber material.

6. The method of claim 4 or claim 5, wherein the first fiberglass layer (304) is manufactured of a thermoplastic material, and further comprising:
arranging the first fiberglass layer (304) relative to the one or more non-woven carbon fiber components (102A-C); and
applying the one or more of heat or pressure to the one or more non-woven carbon fiber components (102A-C) and the first fiberglass layer (304) to form a sub-assembly including the non-woven carbon fiber layer (302) and the first fiberglass layer (304).

7. The method of any of claims 1 to 6, wherein the first fiberglass layer (304) is manufactured of one of a thermoset fiberglass composite material or a thermoplastic fiberglass composite material.

8. The method of any of claims 1 to 7, wherein the first fiberglass layer (304) is configured to be impregnated with a resin product.

9. The method of any of claims 1 to 8, further comprising:
machining the composite layered assembly (300) to form a layered product; and
installing the layered product within an aircraft system (700).

10. A composite layered assembly (300), comprising:
a non-woven carbon fiber layer (302);
a first fiberglass layer (304) having a bottom surface (314) configured to be operably coupled with a top surface (312) of the non-woven carbon fiber layer (302); and
a decorative layer (306) configured to be operably coupled with a top surface (316) of the first fiberglass layer (304),
wherein the decorative layer (306), the first fiberglass layer (304), and the non-woven carbon fiber layer (302) are configured to be exposed to one or more curing conditions to form a composite layered assembly (300).

11. The composite layered assembly of claim 10, further comprising a second fiberglass layer (508) configured to be operably coupled with a bottom surface (410) of the non-woven carbon fiber layer (302),
wherein the decorative layer (306), the first fiberglass layer (304), the non-woven carbon fiber layer (302), and the second fiberglass layer (508) are configured to be exposed to the one or more curing conditions to form the composite layered assembly (500), optionally,
wherein the first fiberglass layer (304) and the second fiberglass layer (508) are configured to be impregnated with a resin product, and/or, wherein the first fiberglass layer (304) and the second fiberglass layer (508) are manufactured of one of a thermoset fiberglass composite material or a thermoplastic fiberglass composite material.

12. The composite layered assembly of claim 10, wherein the non-woven carbon fiber layer (302) is configured to be manufactured of a recycled non-woven carbon fiber material, and/or:
wherein the first fiberglass layer (304) is manufactured of a thermoplastic material,
wherein the first fiberglass layer (304) is configured to be arranged relative to one or more non-woven carbon fiber components (102A-C), the non-woven carbon fiber layer (302) configured to be formed of the one or more non-woven carbon fiber components (102A-C), and
wherein the first fiberglass layer (304) and the one or more non-woven carbon fiber components are configured to be exposed to one or more of heat or pressure to form a sub-assembly including the non-woven carbon fiber layer (302) and the first fiberglass layer (304), and/or,
further comprising an adhesive layer configured to be positioned between the top surface (316) of the first fiberglass layer (304) and the decorative layer (306) to couple the decorative layer (306) with the top surface (316) of the first fiberglass layer (304) during exposure to the one or more curing conditions.

13. A method for forming a composite layered assembly (300), comprising:
arranging a bottom surface (314) of a first fiberglass layer (304) facing toward to a top surface (412) of a recycled carbon fiber layer (402), the recycled carbon fiber layer (402) configured to be manufactured of a non-woven carbon fiber material;
arranging a top surface (524) of a second fiberglass layer (508) facing toward to a bottom surface (410) of the recycled carbon fiber layer (402);
arranging a decorative layer (306) relative to a top surface (316) of the first fiberglass layer (304); and
exposing the decorative layer (306), the first fiberglass layer (304), the recycled carbon fiber layer (402), and the second fiberglass layer (508) to one or more curing conditions to form a composite layered assembly (500).

14. The method of claim 13, further comprising applying one or more of pressure or heat to the non-woven carbon fiber material to form the recycled carbon fiber layer (402), optionally,
wherein the first fiberglass layer (304) and the second fiberglass layer (508) are manufactured of a thermoplastic material, and further comprising:
arranging the first fiberglass layer (304) and the second fiberglass layer (508) relative to the non-woven carbon fiber material; and
applying the one or more of heat or pressure to the first fiberglass layer (304), the second fiberglass layer (508), and non-woven carbon fiber material to form a sub-assembly including the recycled carbon fiber layer (402), the first fiberglass layer (304), and the second fiberglass layer (508).

15. The method of claim 13 or claim 14, further comprising:
forming the composite layered assembly (500) into a layered product; and
installing the layered product within an aircraft system (700).
